# EUROPEAN PATENT APPLICATION

(11) **EP 2 980 700 A1**
(43) Date of publication of application: **03.02.2016**
(21) Application number: 15178695.1
(22) Date of filing: 28.07.2015
(51) Int. Cl.: G06F 9/50, H04L 12/28, H05B 37/00, H04L 29/08

(54) **NETWORKABLE LIGHT EMITTING DEVICE AND METHODS AND SYSTEMS FOR USING SAME**

(30) Priority: 02.08.2014 US 201462032548 P; 10.10.2014 US 201414512381
(71) Applicant: OBX Computing Corporation, Raleigh, NC 27603 (US)
(72) Inventor: SULLIVAN, Thomas Richard, Raleigh, NC North Carolina 27603 (US); BEDERJIKIAN, Ara, Raleigh, NC North Carolina 27603 (US); MACDONALD, Stuart Allister, Raleigh, NC North Carolina 27603 (US)
(74) Representative: Leach, James

(57) **Abstract**

A networkable light-emitting device and methods and systems for using same are provided. According to one aspect, the subject matter described herein includes a a networkable light-emitting device that includes a light emitting element, a wireless transceiver for communicating with other networkable light-emitting devices to create a wireless network, a memory for storing programs uploaded to the device via the wireless network, and a controller that includes hardware for executing at least one program stored in the memory.

## Description

### TECHNICAL FIELD

This disclosure relates to light emitting devices that have enhanced features. More specifically, it relates to networkable light emitting devices having networking, computing, and data storage capabilities, as well as methods and systems for using same.

### BACKGROUND

Light emitting devices, such as incandescent and fluorescent bulbs, are ubiquitous. As light emitting diode (LED) bulbs become lower in price they too will be installed literally all over the globe. Since LEDs are by nature monochromatic, so-called white-light LED bulbs are created by combining colors from multiple monochrome LEDs to form light that appears white. For example, the outputs of separate red, green, and blue LEDs may be combined to form white light, but careful adjustment of the intensities of each of the colors is required to create white light having a pleasing color temperature. Each color of LED, however, has its own characteristic curve of voltage/current versus output intensity. This means that dimmable LEDs must compensate for these separate intensity profiles as the LED bulb is dimmed, or else the color temperature of the white light will change as the overall intensity of the bulb changes, which is undesired.

Because of this, white, dimmable LED bulbs usually include some nominal amount of processing capability, which is used to adjust the control voltages or currents into each of the separate color LEDs in a way that maintains the desired color temperature of the output light regardless of the overall intensity of the bulb, i.e., so that the color temperature does not shift when the bulb is dimmed or brightened.

In addition, this nominal processing capability may be put to use to allow a single white LED bulb to produce different colors, e.g., the bulb may be set to shine blue continuously, for example, or to cycle through a series of colors as the outputs of the individual red, green, and blue LEDs are adjusted, usually according to some algorithm.

A recent development is to provide a means by which a user can remotely control the color and/or intensity of a white LED bulb. Some prior art bulbs include a wireless or infrared receiver by which a user, using a wireless or infrared remote control, can send commands to the bulb to cause it to dim, to change color. Some prior art remote controls include a pre-loaded program that, when executed by the user, causes the remote to send out a series of commands to change the color and/or intensity of the light bulb over time, as dictated by the program running on the remote.

Prior art bulbs, however, use this processing power only to control bulb function. This means that while the processor is not being used to change the bulb color or intensity, that processing power is idle. Thus, LED bulbs and other bulbs that have processing power represent an ideally situated platform for distributed computing or data storage. This is a vast resource that is ubiquitous, readily available, and untapped.

Thus, in light of this untapped potential for distributed computing or data storage, there is a need for networkable light emitting devices having networking, computing, and data storage capabilities, as well as methods and systems for using same.

### SUMMARY

According to one aspect, the subject matter described herein includes a a networkable light-emitting device that includes a light emitting element, a wireless transceiver for communicating with other networkable light-emitting devices to create a wireless network, a memory for storing programs uploaded to the device via the wireless network, and a controller that includes hardware for executing at least one program stored in the memory.

According to another aspect, the subject matter described herein includes a wireless network, that includes a set of networkable light-emitting devices, each device including a light emitting element, a wireless transceiver for communicating with other networkable light-emitting devices to create the wireless network, a memory for storing programs uploaded to the device via the wireless network, and a controller comprising hardware for executing at least one program stored in the memory, where at least one of the devices executes a program that was uploaded to it via the wireless network to perform a processing task.

According to yet another aspect, the subject matter described herein includes a method for distributed processing. The method includes, at a networkable light-emitting device having a light emitting element, a wireless transceiver for communicating with other networkable light-emitting devices to create a wireless network, a memory for storing programs uploaded to the device via the wireless network, and a controller comprising hardware for executing at least one program stored in the memory: receiving, via the wireless transceiver, a program to be executed by the controller;
storing the received program into the memory; and executing, by the controller, the received program.

According to yet another aspect, the subject matter described herein includes a networkable controller for controlling a light-emitting element, the controller comprising: an output for controlling an operation of a light emitting element; a wireless transceiver for communicating with other networkable controllers to create a wireless mesh network; a memory for storing programs uploaded to the controller via the wireless transceiver; and a hardware circuit for executing programs stored in the memory, wherein at least one program being executed by the hardware circuit performs an operation that is unrelated to the operation of the light emitting element.

The subject matter described herein can be implemented in software in combination with hardware and/or firmware. For example, the subject matter described herein can be implemented in software executed by a processor. In one exemplary implementation, the subject matter described herein can be implemented using a non-transitory computer readable medium having stored thereon computer executable instructions that when executed by the processor of a computer control the computer to perform steps. Exemplary computer readable media suitable for implementing the subject matter described herein include non-transitory computer-readable media, such as disk memory devices, chip memory devices, programmable logic devices, and application specific integrated circuits. In addition, a computer readable medium that implements the subject matter described herein may be located on a single device or computing platform or may be distributed across multiple devices or computing platforms.

### BRIEF DESCRIPTION OF THE DRAWINGS

Embodiments of the subject matter described herein will now be explained with reference to the accompanying drawings, wherein the like reference numerals represent like parts, of which:
Figure 1 is a cutaway view of an exemplary networkable light-emitting device according to an embodiment of the subject matter described herein;
Figure 2 is network diagram illustrating an exemplary wireless network made up of networkable light-emitting devices according to another embodiment of the subject matter described herein;
Figure 3 is a flow chart illustrating an exemplary process for distributed processing according to an embodiment of the subject matter described herein;
Figure 4 illustrates additional views of an exemplary networkable light-emitting device according to embodiments of the subject matter described herein;
Figures 5 and 6 illustrate other form factors to which the subject matter described herein may be applied, including flat-panel LEDs, traditional fixtures, and LEDs designed to replace traditional fluorescent tubes; and
Figure 7 is a cutaway view of an exemplary networkable light-emitting device according to another embodiment of the subject matter described herein.

### DETAILED DESCRIPTION

The following description and drawings are illustrative and are not to be construed as limiting. Numerous specific details are described to provide a thorough understanding of the disclosure. However, in certain instances, well-known or conventional details are not described in order to avoid obscuring the description. References to "one embodiment" or "an embodiment" in the present disclosure can be, but not necessarily are, references to the same embodiment and such references mean at least one of the embodiments.

Reference in this specification to "one embodiment" or "an embodiment" means that a particular feature, structure, or characteristic described in connection with the embodiment is included in at least one embodiment of the disclosure. The appearances of the phrase "According to one aspect" in various places in the specification are not necessarily all referring to the same embodiment, nor are separate or alternative embodiments mutually exclusive of other embodiments. Moreover, various features are described which may be exhibited by some embodiments and not by others. Similarly, various requirements are described which may be requirements for some embodiments but not other embodiments.

The terms used in this specification generally have their ordinary meanings in the art, within the context of the disclosure, and in the specific context where each term is used. Certain terms that are used to describe the disclosure are discussed below, or elsewhere in the specification, to provide additional guidance to the practitioner regarding the description of the disclosure. For convenience, certain terms may be highlighted, for example using italics and/or quotation marks. The use of highlighting has no influence on the scope and meaning of a term; the scope and meaning of a term is the same, in the same context, whether or not it is highlighted. It will be appreciated that same thing can be said in more than one way.

Consequently, alternative language and synonyms may be used for any one or more of the terms discussed herein, nor is any special significance to be placed upon whether or not a term is elaborated or discussed herein. Synonyms for certain terms are provided. A recital of one or more synonyms does not exclude the use of other synonyms. The use of examples anywhere in this specification, including examples of any terms discussed herein, is illustrative only, and is not intended to further limit the scope and meaning of the disclosure or of any exemplified term. Likewise, the disclosure is not limited to various embodiments given in this specification.

Without intent to limit the scope of the disclosure, examples of instruments, apparatus, methods and their related results according to the embodiments of the present disclosure are given below. Note that titles or subtitles may be used in the examples for convenience of a reader, which in no way should limit the scope of the disclosure. Unless otherwise defined, all technical and scientific terms used herein have the same meaning as commonly understood by one of ordinary skill in the art to which this disclosure pertains. In the case of conflict, the present document, including definitions, will control.

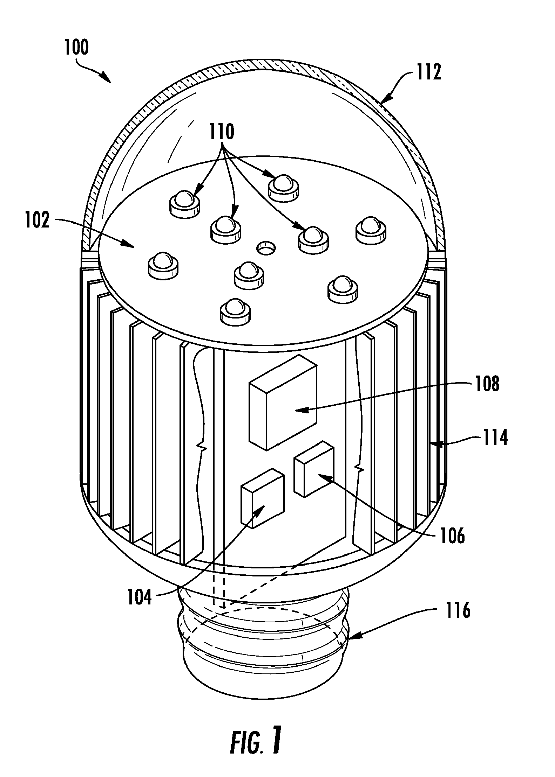

Figure 1 is a cutaway view of an exemplary networkable light-emitting device according to an embodiment of the subject matter described herein. In the embodiment illustrated in Figure 1, a networkable light-emitting device **100** includes a light emitting element **102,** a wireless transceiver **104** for communicating with other networkable light-emitting devices to create a wireless network, a memory **106** for storing programs uploaded to the device via wireless network, and a controller **108** for executing programs stored in memory **106.** In the embodiment illustrated in Figure 1, light emitting element **102** includes multiple light emitting diodes (LEDs) **110,** which may produce a variety of colors that can be mixed to produce white or colored light. In the embodiment illustrated in Figure 1, light emitting element **102** may be covered by a transparent or translucent dome **112** that may protect LEDs **110** and/or diffuse the light produced by them. The body **114** may act as a heat sink for the circuitry inside, and may include fins or other structures to increase surface area or otherwise improve heat transfer away from the electrical components. The base **116** is typically a standard threaded base, and the body **114** may be of a shape or profile that allows device **100** to be used to replace standard incandescent bulbs.

According to one aspect, wireless transceiver **104** may be or may include a radio-frequency (RF) transceiver. Examples of RF transceivers include, but are not limited to, transceivers for wireless networking or Wi-Fi networks, transceivers for cellular or mobile networks, transceivers for near-field communication (NFC), and transceivers for radio-frequency identification (RFID). According to one aspect, wireless transceiver **104** may support the Internet protocol (IP) or other wireless data protocols. According to one aspect, wireless transceiver **104** may be or may include an infra-red (IR) or visible light transceiver. Other types of wireless transceivers and/or wireless protocols are within the scope of the subject matter claimed.

According to one aspect, memory **106** may be, may include, or may be part of a data storage module. Memory **106** may include volatile memory. Examples of volatile memory include, but are not limited to, random access memory (RAM), such as static RAM (SRAM) or dynamic RAM (DRAM). Memory **106** may include non-volatile memory. Examples of non-volatile memory include, but are not limited to, read only memory (ROM), flash memory, ferro-magnetic memory (FRAM), hard disk drive (HDD), and solid state drive (SDD). Memory **106** is used for storing programs that have been uploaded to device **100** via the wireless network or other means. Memory **106** may be used to store data, including data received by the device via wireless network **106** or via sensors in, on, or connected to device **100.** According to one aspect, data received by device **100** may modify the operation of a program being executed by controller **108** or may cause controller **112** to start, stop, add, remove, or change the program being executed by controller **108.**

According to one aspect, a program being executed by controller **108** may control an operation of light-emitting element **102.** For example, a program executed by controller **108** may turn light-emitting element **102** on or off, change the color or intensity of the light being produced by light-emitting element **102,** and so on.

According to one aspect, a program being executed by controller **108** may perform an operation or computation that is entirely unrelated to the operation of light emitting element **102.** For example, device **100** may receive and execute a program that instructs controller **108** to perform a numerical calculation and send the results to another entity via wireless network **106.** Examples of such programs include, but are not limited to, distributed calculation tasks like protein folding, data mining, and tasks that benefit from massively parallel computation. In one scenario, for instance, a building, station, or other installation having a large number of devices **100** could collectively function as a massively parallel computing resource.

According to one aspect, sensors may be directly incorporated or remotely attached (wired or wirelessly) to device **100.** These sensors include, but are not limited to, temperature sensors, air pressure sensors, smoke detection sensors, gas concentration (e.g., NO2, CO, CO2, or other gases) sensors, light sensors, seismographic sensors, rain sensors, wind sensors, and cameras. The sensor data may be processed directly on the light bulb (e.g. to control light brightness), may be stored for statistical uses, and/or may be forwarded to a data center for various purposes, such as storing camera footage, evaluating and triggering alarms, etc.

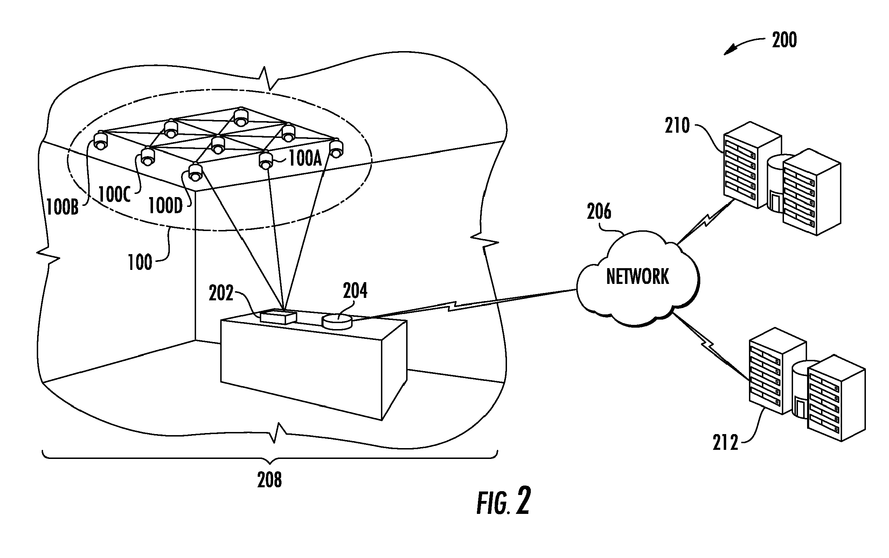

Figure 2 is block diagram illustrating a wireless network made up of networkable light-emitting devices according to another embodiment of the subject matter described herein. In the embodiment illustrated in Figure 2, network **200** includes a number of networkable light-emitting devices, such as device **100** shown in Figure 1, for example, that communicate with each other wirelessly. According to one aspect, each device **100** includes a light emitting element, a wireless transceiver, a memory, and a controller that executes programs stored in the memory, where at least one of the devices executes a program that was uploaded to it via the wireless network and which performs a processing task.

According to one aspect, network **200** may include a control unit **202** for communicating with one or more of devices **100.** In the embodiment illustrated in Figure 2, the lines from control unit **202** to devices **100,** and the lines between devices **100,** represent wireless communication between these elements. In this manner, the collection of devices **100** can form a mesh network that can be used not only by device **100** but also by other wireless-capable devices in the vicinity, such as desktop and laptop computers, mobile phones and other mobile devices, wireless remotes, and so on.

According to one aspect, control unit **202** may upload programs to, receive results or data from, and/or communicate data to some or all of devices **100.** For example, control unit **202** may upload a program to a device directly if the device is within wireless range, such as device **100A** in Figure 2. Devices which are out of wireless range, represented by device **100B** in Figure 2 (note: this drawing is not to scale), may be reached indirectly via intermediary devices, such as devices **100C** and **100D** in Figure 2.

According to one aspect, each device **100** is uniquely identified. For example, each device may have its own IP address or multiple addresses. In one embodiment, control unit **202** may use a broadcast address to communicate with all devices simultaneously. In one embodiment, each device **100** may be dynamically assigned an address. For example, control unit **202** may be a dynamic host control protocol (DHCP) host and may dynamically assign IP addresses to each device **100** in the wireless network **200.** In another embodiment, each device **100** may be assigned a static IP address. The subject matter disclosed herein is not limited to IP addresses, or even to IP networks. Other types of network protocols may be used, and other types of addresses may be used as appropriate and available.

According to one aspect, a program uploaded to a device may perform a processing task that controls on operation of the light emitting element, such as to turn the element on or off, or change the intensity or color of the light produced by the light emitting element.

According to another aspect, a program uploaded to a device may perform a processing task that is unrelated to an operation of the light emitting element. For example, control unit **202** may treat the set of devices **100** as a set of computing resources to which it allocates computing tasks. In one scenario, control unit **202** may transmit a program to a particular device **100** for execution by that device. The program may be sent from control unit **202** to device **100** via wireless network **106.**

According to one aspect, the program being executed by device **100** may generate a result that is reported back to control unit **202.** Control unit **202** may use the information so received in a number of ways. For example, control unit **202** may use the results to make decisions about what tasks should next be performed, and by which device, and upload new tasks to one or more of devices **100** accordingly; control unit **202** may aggregate the results for use by itself, by the devices, or by some other entity; control unit **202** may store the information locally, such as in its own mass storage device, or it may use the memories of devices **100** as a distributed data store, e.g., send the data to one or more devices **100** for temporary or long-term storage; and control entity **202** may send the data to an entity other than itself or devices **100.** These examples are illustrative and not intended to be limiting: other uses of the data received from devices **100** by control unit **202** are within the scope of the subject matter claimed.

In one embodiment, control unit **202** may perform a gateway function, e.g., to connect network **200** with another network, such as the Internet. In the embodiment illustrated in Figure 2, for example, control unit **202** connects via a router or firewall **204** to network **206.** According to one aspect, control unit **202** may communicate and optionally coordinate with other entities. In the embodiment illustrated in Figure 2, for example, network **200,** control unit **202,** and router/firewall **204** may be part of a datacenter **208,** which can communicate with other data centers **210** and **212.** Together, data centers **208, 210,** and **212** may form a geographically dispersed processing, storage, and/or security domain.

In one embodiment, each device **100** is associated with a service set identifier (SSID), which may be unique to each device or may be shared among a collection of devices. Each collection may be all or just a subset of all devices in the mesh network. The devices may use the SSID to identify wireless devices with which to communicate (or not communicate.) For example, one set of devices **100** may be organized into one mesh network while another set of device **100** may be organized into another mesh network that may or may not occupy the same space as the first network. Devices in the first network may identify other devices within their mesh network by maintaining a list of SSIDs for every device in their network.

In one embodiment, devices may associate themselves with multiple networks, in which case the device may maintain two lists of SSIDs, for example. In large installations, devices may maintain SSIDs that identify only a few of the many other devices that may be within wireless range. For example, each device **100** may maintain in their list of SSIDs only the SSIDs for the 8 closest other devices, where "distance" may be determined from signal strength (e.g., the stronger the signal, the smaller the distance), from IP address (e.g., the larger the numerical difference, the farther the distance), or other metric. The use of SSIDs to logically group devices **100** into networks allows a wireless mesh network to be logical partitioned into sub-networks, where some devices in the network are dedicated to providing streaming video while other devices in the network may be dedicated to providing VoIP, and so on. In addition, the dynamically configurable nature of networkable light-emitting devices **100** allows the ratio of streaming video devices to VoIP devices to be adjusted or reconfigured as necessary, in response to fluctuating demands on the overall network.

According to one aspect, network **200** may be a self-configuring Wi-Fi network which finds capable network nodes in its proximity. Every node may relay messages for others, so if a local node has to send data to a distant node which is not in the range of the local node's radio, the local node can send the data to its neighbor, which will relay the data for it over multiple hops until the data reaches its destination. In one embodiment, for example, each device **100** in network **200** may maintain its own routing table. One advantage to self-configuring networks is that no manual intervention is necessary, and the network nodes will automatically find the best paths among themselves. A mesh network naturally also has a self healing feature, in that if a node is removed or added to the network, the paths will be recalculated and the mesh network will continue to operate without interruption.

In one embodiment, network **200** may be configured such that a user can connect to any network node as an access point (AP) and can use any protocol (e.g., IPv4, IPv6, DHCP, or other protocol) to communicate. In this sense, network **200** may act as a distributed layer 2 switch, where each node provides one or more "switch ports" of a big, distributed switch. In one embodiment, it is possible to "roam" among network nodes; the mesh can automatically detect when a client changes from one AP to the next and deliver data accordingly without connection breaks.

Where network **200** provides a layer 2 Ethernet compatible network, network **200** may be used as backbone to transport client traffic. In one embodiment, for example, clients can use regular Wi-Fi to connect to a device **100,** which acts as their access point. The data is then transported through the mesh to the next uplink. This uplink may be, but is not limited to, a controller which is part of the system, a standard access point, or a 3G connection to the internet. In this manner, devices **100** may provide Wi-Fi/repeater service for a whole area for users and may replace existing Wi-Fi installations.

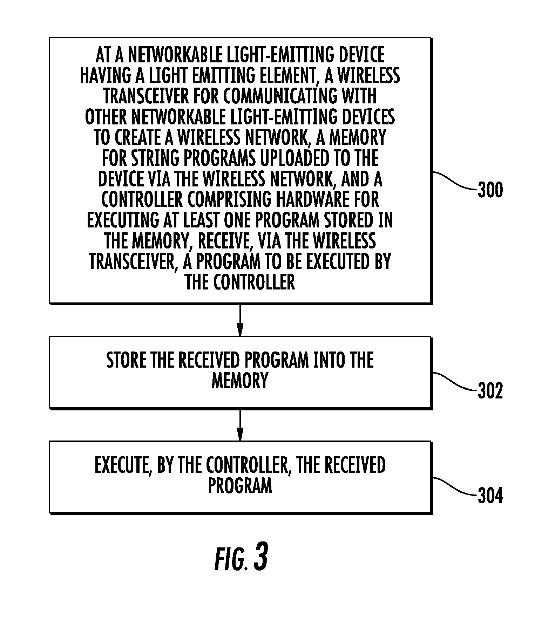

Figure 3 is a flow chart illustrating an exemplary process for distributed processing according to an embodiment of the subject matter described herein. In the embodiment illustrated in Figure 3, at step **300,** the process includes, at a networkable light-emitting device having a light emitting element, a wireless transceiver for communicating with other networkable light-emitting devices to create a wireless network, a memory for storing programs uploaded to the device via the wireless network, and a controller comprising hardware for executing at least one program stored in the memory, receiving, via the wireless transceiver, a program to be executed by the controller. Referring to network **200** in Figure 2, for example, networkable light-emitting device **100B** may receive a program from another entity, such as control unit **202,** via wireless network **200.** In this example, the program may have come directly from control unit **202** or indirectly via an intermediary device, such as networkable light-emitting device **100A** or **100D.**

At step **302,** the received program is stored into the memory located within the networkable light-emitting device. Referring again to Figure 2, for example, once device **100B** receives the program it stores the program into its own memory, which may be non-volatile memory, such as FLASH memory, for example, or volatile memory such as SRAM or DRAM.

At step **304,** the controller of the networkable light-emitting device executes the received program. In the example where device **100B** stores the received program in to non-volatile or other persistent mass storage, the controller of device **100B** may first load the program into RAM and execute it from there. If device **100B** stored the received program into RAM from the beginning, the processor may be able to simply start executing the program as is. Other approaches are contemplated.

Networks created by sets of networkable light-emitting devices **100,** such as network **200** in Figure 2, may span extraordinarily broad and diverse areas. Networkable light-emitting devices **100** may form wireless networks within homes, large or small buildings, shopping malls, public or private spaces, roads and highways, even within moving vehicles such as automobiles, trains, airplanes, and ships. Wherever wireless networks exist, there will be security considerations, especially where network **200,** and the processing and data storage resources within devices **100,** is used as a data center.

The first line of defense in a traditional data center is physical security. Traditional data centers protect their services and assets by protecting their actual location. Whether it is obfuscation by hiding the location of the data center, or protection and access control via biometrics and armed guards, a considerable amount of effort and cost is consumed in reducing and controlling how and to whom the physical assets are exposed. In spite of these efforts there are very few data centers, even up to and including Tier 3 data centers, which have not been hacked in recent years. So physical security, while still a necessity for traditional data centers, is not a cure-all or a means of protection for their clients.

Using a set of networkable light-emitting devices to form a network provides an unexpected advantage over traditional data centers: the processing and storage resources are ubiquitous, widely dispersed, and, one might say, hiding in plain sight. Thieves breaking into a known data center may be surprised to find that there are no obvious servers there - no racks or conventional computer units - not knowing that the ceiling lights are, in fact, the data center. Because the processing power and/or storage units are very, very distributed, finding and collecting all of the light bulbs could be time consuming - assuming that the bulbs are easily accessible, which may not be the case for high ceilings or bulbs enclosed in fixtures - and not something that can be quickly grabbed and taken, as is the case with CPUs and even rack units. Because multiple networks **200** may be even more highly distributed - each network in its own office building, where each building is in a different state, for example - the processing or storage resources of such networks are truly very dispersed. In short, they are more cloud-like than traditional cloud computing.

According to one aspect, a distributed data center is defined as the set of compute and storage resources bound together by the network that interconnects them and the users who consume those resources. Devices include compute and storage resources. A network includes interconnection mechanisms for bringing the resources together. Users include owners of the devices and consumers of the resources. Devices that offer the compute and storage resources in support of the cloud services are by their very nature exposed.

Thus, in one embodiment, each and every device that is operational in network **200** must be registered, i.e. known to the system. This registration occurs upon device activation. Once a device **100** is activated it must continuously be authenticated and authorized to continue to operation within network **200.** Only known and authenticated devices are allowed within network **200.** This approach is consistent with the banking world and connected public ATM's of today.

The network that connects these devices may run, in whole or in part, over the public Internet, and therefore all signaling and control messages should be secured. Similarly all data exchanges should be protected. According to one aspect, this securing comes in two forms: the use of transport layer security (TLS) and secure sockets layer (SSL) both of which use the X.509 standard to establish secure end-to-end connected communications paths over which the payload is encrypted. For further protection, any files which are transferred are encrypted and securely, digitally signed in a manner that prevents interception or monitoring by unknown parties. With options for client-side encryption, where the end customer holds the key, sensitive data is not sent in the clear across network **200.**

The remaining potential for insecurity in a distributed data center is the users; those who consume the cloud services resources. In one embodiment, therefore, all users must be known, i.e. registered and authenticated. Again through the use of secure Internet protocols and encryption on both the client side and the service sides, data exchanges are not sent as unencrypted text. For enhanced security, in one embodiment users must regularly re-authenticate.

Ultimately what needs to be protected is the data that flows through the system and the services which utilize or produce said data. Thus, in one embodiment, data protection, data integrity, and data preservation must be addressed.

Data protection comes in several forms including, encryption, segmentation, protocols and ownership. In one embodiment, client data is encrypted using state-of-the-art AES 128/256 bit key encryption. This encryption stays in force so long as the data resides in the protected domain. In one embodiment, data management applications that are approved for use within network **200** may provide client-side encryption, ensuring the data is protected before leaving the customer's premises. In this way their security, privacy, and asset protection policies and services remain in effect. Therefore privacy and compliance are maintained for many regulatory and legal constraints.

Encryption alone is not sufficient to meet high security standards. In one embodiment, the data is further protected by taking the encrypted files and segmenting them and distributing the segments disjointly among devices **100** within network **200** and/or among multiple networks **200** that are geographically diverse. Referring to Figure 2, for example, data segments may be distributed disjointly among the multiple data centers **208, 210,** and **212.** In this manner, even if all all of the data from one of the data centers may be obtained, none of the encrypted data segments would be sufficient to decrypt into the original user content.

The same mechanism that protects the customer's data through segmentation also ensures the integrity of the content through two mechanisms, standard digital signatures and forward error correction. These mechanisms utilize the same techniques used in maintaining content integrity in RAID 6 or better SAN arrays today.

The final critical element in data and services protection is preservation. According to one aspect, this is achieved by the very nature of the distributed data center architecture of network **200.** In one embodiment, through the same techniques mentioned above, the segmented and encrypted client data is not only distributed throughout network **200,** it is also replicated. In this manner the loss of one or several devices from within the network does not impact the ability to restore the customer's data. With this approach, up to 70% of the devices **100** within network **200** could be inoperable with no impact on the ability to reconstruct the original data. Where network **200** (and any sister networks in other datacenters) is also geographically distributed, this provides some immunity from local influences such as of weather, power grids, geo-political boundaries, regulatory domains, even tectonic motion; a disaster in one or multiple locales does not put the customer data at risk.

In one embodiment, network **200** may use one or more of the following protocols, mechanisms and techniques listed below for data and service protection. This list is intended to be illustrative and not limiting.
**Protocols:** HTTPS, SSL, TLS, X.509
**Cryptography:** AES 128/256, SHA-2, SHA-3
**Techniques:** RAID 6, Replication, Duplication, Distribution, Obfuscation, Entropy

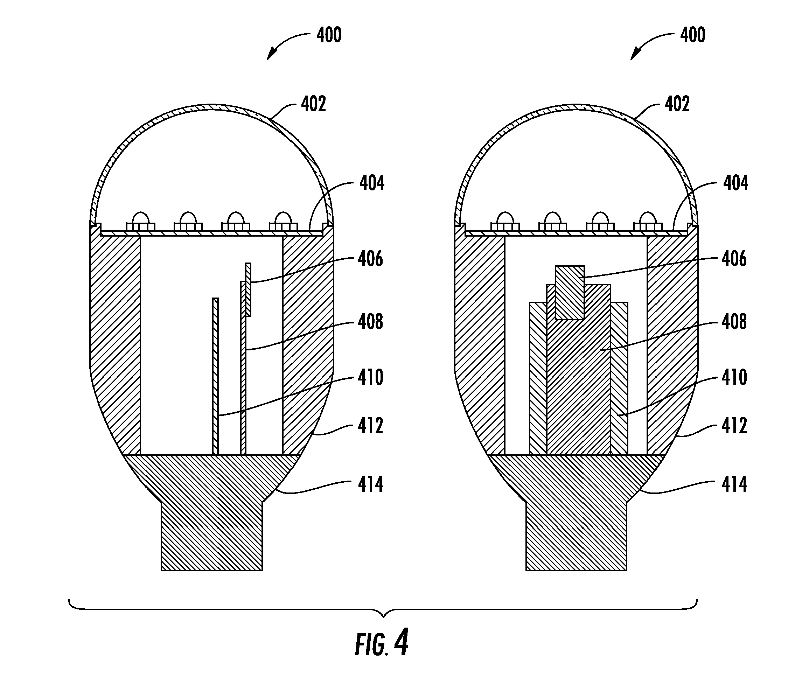

Figure 4 illustrates additional views of an exemplary networkable light-emitting device according to embodiments of the subject matter described herein. Although the embodiments described above are in a form factor that is traditionally associated with incandescent bulbs, the same concepts may be applied to other form factors as well. Figure 4 shows a cross-section of a front and side view, respectively, of networkable light-emitting device **400.** According to one aspect, device **400** includes a translucent or transparent cover **402** that protects one or more light emitting elements, and may operate to focus, spread, or diffuse light. In the embodiment illustrated in Figure 4, the light emitting elements are mounted to a planar module **404,** but other arrangements, structures, or topologies are also contemplated.

In the embodiment illustrated in Figure 4, device **400** includes a Wi-Fi or other type of wireless antenna **406,** a printed circuit board **408** containing a processor, a memory, or circuitry that may include hardware, software, or firmware, and an LED driver board **410.** The body of the bulb **412** may be of any shape, including but not limited to the shape of any standard incandescent bulb. In one embodiment, body **412** may include fins, heat sinks, or other structural characteristics that allow heat to be removed from the LEDs or other internal components. In the embodiment illustrated in Figure 4, device **400** has a base **414** for securing the bulb into a socket. Base **414** may have threads, pins, or other types of electrical contacts for supplying power to the LEDs and internal components. The number, position, size, function, features, etc., of the components illustrated in Figure 4 are intended to be illustrative only and not limiting.

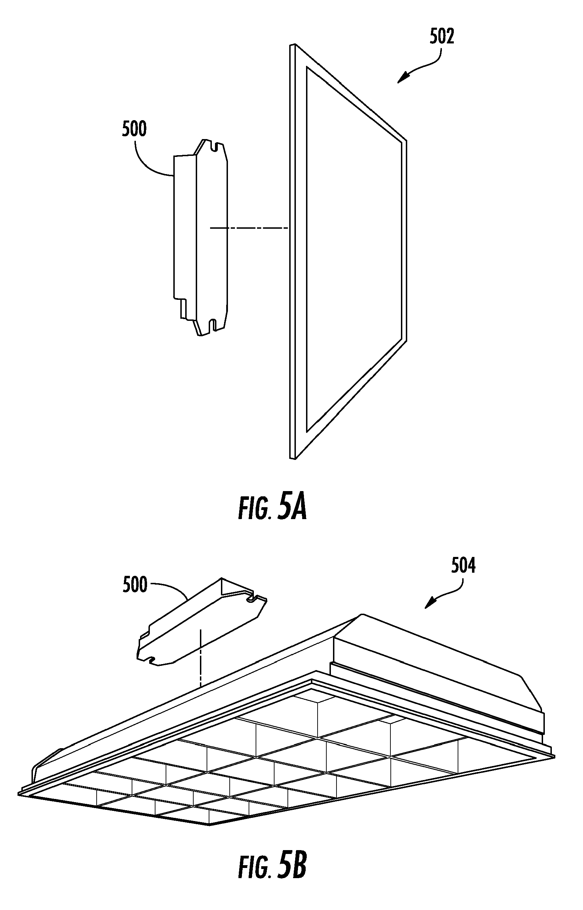

Figure 5 illustrates other form factors to which the subject matter can apply. For example, the wireless transceiver, memory, and controller board (or boards) may be contained in a stand-alone package or unit **500,** which can be attached to the back of a flat LED panel, such as panel **502,** or mounted within light fixtures traditionally designed to hold fluorescent tubes, such as fixture **504.** Traditional fixtures **504** may be upgraded to use an LED light that is designed to replace fluorescent light tubes.

Because stand-alone unit **500** need not fit into the limited volume of a standard incandescent bulb form factor, stand-alone unit **500** may be significantly bigger than its single bulb counterpart. This allows stand-alone unit **500** to have a larger control board and the benefits that this provides, including, but not limited to, more processing horsepower, a larger number of processors, more memory, more powerful wireless capability, additional sensors, and so on. Other benefits include the ability for one board to control multiple light emitting devices within a single fixture as well as multiple fixtures, and the ability to expand, extend, or augment the functions of the unit, e.g., via the attachment of additional drives, memory, sensors, or other devices.

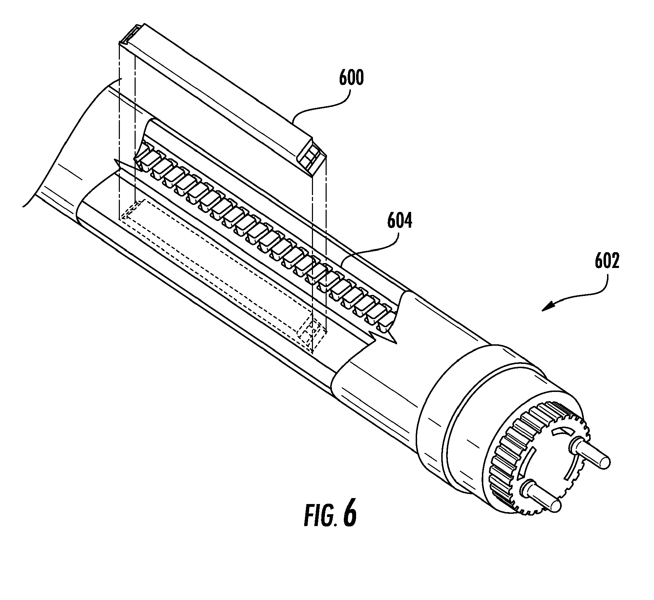

Figure 6 illustrates an embodiment in which the wireless transceiver, memory, and controller board **600** is designed to be contained within an LED tube **602** that replaces traditional fluorescent tubes. Such LED replacements for fluorescent tubes typically include an array of LEDs **604** that run the length of the tube body, the outer surface of which may be transparent or translucent over the LEDs. The array of LEDs **604** is typically mounted in the center of the circular cross section, which leaves a significant volume below the LED board empty. In one embodiment, a controller board 600 having a processor, memory, and a wireless transceiver may be mounted within that unused space within the tube-shaped body. Alternatively, a controller board may be attached to the outside of the body, or even attached to the fixture but electrically connected to the body.

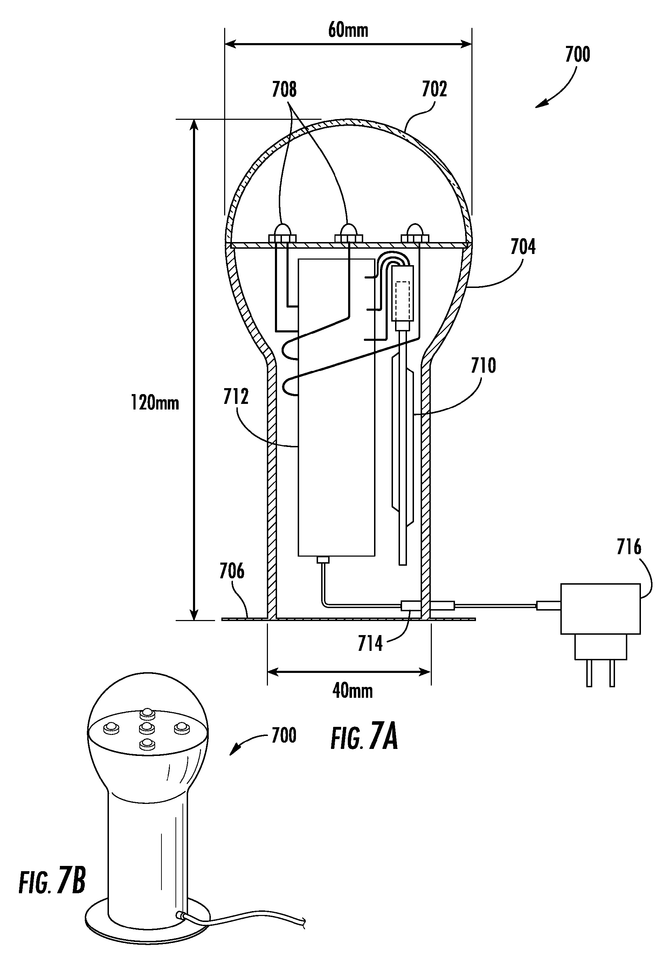

Figure 7 is a cutaway view of an exemplary networkable light-emitting device according to another embodiment of the subject matter described herein. In the embodiment illustrated in Figure 7, device **700** includes a transparent or translucent surface **702,** which may be a bulb, dome, or other shape, located at one end of a body **704.** Body **704** may include a base or stand **706** at the other end, which allows device **700** to be placed on or attached to any surface. For example, device **700** may rest on a table or other horizontal supporting surface, or it may be mounted to a surface, such as to a wall or ceiling, using attachment devices such as screws or other types of fasteners. In another embodiment, device **700** may have standard threaded base or other connector. Device **700** may include an AC/DC power supply or power converter as needed.

Device **700** also includes a light emitting element **708.** In the embodiment illustrated in Figure 7, for example, light emitting element **708** includes one or more LEDs, but other types of light emitting elements are also contemplated. In one embodiment, surface **702** and/or light emitting element **708** may be shaped in a manner to focus, spread, scatter, or diffuse the light produced by light emitting element **708.** For example, surface **702** may include a lens structure, a diffuser, or combinations of the above, including multi-lens configurations. The shape of surface **702,** the position and orientation of light emitting elements **708,** or both, may be configured to produce a particular light pattern, e.g., a spot, a flood, a general illumination pattern, and so on. In one embodiment, light emitting element **708** may be sold with a user-selectable set of surfaces **702,** e.g., transparent or translucent, spot or flood, tinted or not tinted, polarized or not polarized, and so on, that may be attached and removed to produce the desired characteristic.

In the embodiment illustrated in Figure 7, device **700** includes a wireless communication module **710** for communicating with a wireless network. In one embodiment, wireless communication module **710** communicates with a 3G cellular network. In other embodiments, wireless communication module **710** may communicate with other types of cellular networks, including, but not limited to, 2G, 2.5G, 4G, LTE, and so on, and/or with other types of wireless networks, including, but not limited to, Wi-Fi, WiMax, and 802.11 variants.

In the embodiment illustrated in Figure 7, device **700** includes a control unit **712** that provides computation resources, such as one or more processor cores and a memory. In one embodiment, control unit **712** controls the operation of light emitting element **708,** but in other embodiments, light emitting element **708** may be independently controlled.

In the embodiment illustrated in Figure 7, control unit **712** uses wireless communication module **710** to communicate wirelessly with other wireless devices, which may include other instances of device **700.** In this manner, two or more devices **700** may connect to an existing wireless network or may create an ad-hoc wireless network, which may be a wireless mesh network.

In the embodiment illustrated in Figure 7, device **700** includes a connector **714** for receiving power from an external power supply **716,** for example. Connector **714** may provide data communication. In one embodiment, for example, connector **714** may be a micro USB socket or other industry standard (or proprietary) socket which supplies power and/or data communication. Connector **714** may be used for extending or enhancing the capabilities of device **700,** such as by adding still or video cameras, surveillance or low-light cameras, smoke detectors, motion detectors, proximity sensors, or other types of detectors/sensors, memory cards, external storage devices, and so on.

The methods and systems described herein are not limited to the bulb or fixture form factors shown in the Figures, but may be designed to be a drop-in replacement for (or otherwise form-factor compatible with) other bulb shapes and sizes, including but not limited to, A, B, C-7, F, G P-25, PS-35, BR, R, RP-11, S, PAR, and T series bulbs, as well as T-5, T-6, T-8, T-12, T-17, U shaped, circular, and compact fluorescent bulbs.

In one embodiment, the processing capability included within the light emitting devices disclosed herein includes the ability to control the operation of the LEDs - turning them on an off, adjusting the color or brightness of the light produced, and so on - but in another embodiment, the processing capability may be separate from the operation of the light emitting structures. For example, security lights, such as high-intensity sodium or mercury vapor lights, are designed to operate continuously at full intensity. The addition of a standalone control unit **500,** for example, to existing security lights could create a mesh network having all of the capabilities and benefits described above except for control of the light emitting structure itself. In one embodiment, control unit **500** could provide simple on/off control to a non-LED light. In other words, the processing and networking capability described herein is not limited to use with LED lights only, but can be applied to other types of lights. For example, one implementation of an incandescent bulb replacement, such as device **100** but without the capability to control the operation of the light emitting structure, would still have value by creating the mesh network of multiple processing units to which jobs may be assigned and downloaded. In these implementations also, the networks created take advantage of the existing and extensive infrastructure (e.g., existing light fixtures) to provide power to (and distributed placement of) wireless transceivers.

In one embodiment, the wireless communication capabilities of the networkable light-emitting devices disclosed herein could be supplemented (or replaced) by other communications capabilities. For example, power line communication (PLC) technology allows communication over the the power grid. PLC technology can be leveraged for different purposes, including, but not limited to, communication between light bulbs, communication between light bulbs and controllers, and communication between light bulbs and power line adapters of the customers. One limitation of the PLC technology, the range limited by the length of the cable, could be mitigated by using a mesh network on the devices, similar to the WiFi mesh networks described above. PLC technology can nicely complement the wireless capabilities as well: if both WiFi and PLC links are available between light bulbs or other devices and both are running the mesh network software, for example, the mesh software could even transparently switch between either technology to transfer data packets to the next device. PLC could provide the additional benefit in environments with a lot of RF congestion in the 2.4 GHz spectrum. It can also improve throughput when the WiFi is used for client access, since the backbone connection to the gateway is done on another medium and not straining the 2.4 GHz spectrum on the same channel any further.

### Example Use Cases

The networkable light-emitting devices described above (hereinafter referred to as "NLD"s) and the wireless networks that can be created from two or more such devices talking with each other wirelessly (hereinafter referred to as "NLD networks"), may be put to use in a wide range of applications. Some of the example applications of NLDs and NLD networks include:

**RFID network -** A wireless network made up of NLDs that also include RFID transceivers may be used to create an RFID network. Applications include, but are not limited to, inventory control and tracking, customer preference tracking, and theft prevention. For example, in a store or warehouse outfitted with NLDs, light fixtures are typically distributed evenly across large warehouse or retail space and also concentrated in locations where human activity typically occurs, such as at a cash register or along display aisles - i.e., exactly where they would need to be to track the location and motion of inventory in a store and/or to track the motion and location of customers within the store.

Inventory tracking. In one embodiment, inventory tracking may be accomplished by attaching RFID tags to items of inventory. NLDs may then be programmed to periodically query all RFID tags within range to determine current inventory and the location of each item that responds to the query. RFID tags that pass by NLDs positioned at entrances/exits may be detected, and that information may be used to track inventory movement / inventory theft.

Customer tracking. In one scenario, a retailer may place RFID tags on shopping carts used by customers, within loyalty cards carried by customers, or some other item that will travel with the customer through a facility. In this manner, a customer's movement through the store - where in the store the customer went, how long that customer stood in front of a particular product, and so on - may be determined, and from this information customer behavior and shopping preferences may be extrapolated.

**Environmental sensors / monitoring -** A wireless network made of NLDs that also include environmental sensors may be used to monitor environmental conditions. Examples of environmental sensors can include, but are not limited to, smoke detectors, heat detectors, carbon monoxide detectors, carbon dioxide detectors, motion detectors, hazardous (or non-hazardous) gas or liquid detectors, hazardous chemical detectors, ambient light detectors, intrusion detectors, etc. According to one aspect, different programs may be uploaded to NLDs according to their location within a facility, their sensor configuration, or a combination of the above. For example, heat detectors in one set of NLDs may be used to provide thermostatic information to heating, ventilation, and air conditioning (HVAC) systems, while heat detectors in another set of NLDs (e.g., in a kitchen or other place with ovens, boilers, or other heat sources) may be configured to act as monitors for fire alarm systems.

**HD video accelerator -** An NLD network having a control unit that acts as a gateway to a computer network may configure the NLDs to operate as a computing farm to perform computations that are suited to massively parallel systems. For example, a video acceleration program may be uploaded to a set of NLDs, which are configured to perform high definition video operations. In this manner, the NLD network operates as a HD video accelerator. Such a configuration could be used to perform real-time video processing and/or batch or offline video processing.

**Network unused cores -** The same concepts described above to provide in-house computing resources could also be extended such that computing resources within the NLDs could be offered for use by outside entities. Just as power companies offer to buy excess power from customers that have solar panels, an operator of a wireless NLD network may offer excess compute resources to Internet or cloud service providers.

**Computing platform to run a virtual office -** An NLD network located within a home, office, hotel, or any other space could be configured as a computing platform that hosts applications and services associated with a virtual office, including, but limited to, cloud applications and data storage. Some or all of the NLDs could act as wireless access points to computers, handheld devices, and mobile phone that support Wi-Fi or other wireless networking protocols, providing coverage throughout the installation. Virtual office applications may be hosted by some or all of the NLDs, and different NLDs may host different applications. In one embodiment, a controller may upload particular applications to particular NLDs based on a number of requirements. For example, instances of an application may be uploaded to more NLDs as demand for that application increases. In another example, applications required by employees may be uploaded into NLDs that are closest to desks, conference rooms, or other locations where people gather or are located, but instances of those applications would not be uploaded to NLDs that are in unoccupied or sparsely occupied areas.

**Computing platform to run a virtual machine network -** An NLD network could be host to virtual machines, forming a virtual machine (VM) network. For example, one NLD could host one VM, one NLD could host multiple VMs, one VM could span multiple NLDs, and so on. In other words, a program that may be received by, stored within, and executed by an NLD does not have to be an application, but may instead be a VM that itself hosts applications. In one embodiment, the virtual office applications described above may be instantiated on virtual machines distributed among multiple NLDs.

**Wireless extension of a wired network -** In one embodiment, an NLD network may operate as a wireless extension of a wired network. For example, if the wireless network includes a control unit having both wired and wireless network interfaces, the control unit may operate as a gateway between the NLDs and a wired network. In this manner, homes or offices that have an existing wired infrastructure, for example, could extend the wired network into areas that for whatever reason do not (or cannot) have network wiring installed but which have light fixtures.

**Smart city backbone for creating a city-wide wireless grid -** Installation of NLDs into public areas including buildings, streets, parks, and so on, could create a city-wide wireless grid that could be available for public or private use. Access could be free, or, under a pay-as-you-go, subscription, or other access plan, could be a source of revenue for the municipality. Where NLDs replace existing light bulbs, installation costs (other than the labor to change the bulb) would be essentially zero, making NLD-based wireless networks an attractive option when compared to traditional methods such as installation of dedicated wireless access points or wireless routers, which must be mounted and connected to an available power supply. In addition, the incorporation of smoke, fire, and/or intrusion sensors could greatly enhance the monitoring capabilities made available to fire departments, emergency medical services, police, and other public services.

**Smart building backbone for creating a building wireless grid -** The same concept described above for a city backbone may also be applied at a smaller scale to create a smart building backbone for creating a building wireless grid. The smart building backbone creates a particularly well suited framework for a variety of smart building features, including power savings (e.g., by turning off NLDs in brightly lit or unoccupied rooms), access (e.g., by including RFID readers to allow authorized persons to enter the building), environmental control (e.g., by adjusting HVAC settings based on room-by-room or other localized conditions) and security (e.g., by detecting when RFID-tagged equipment enters or exits the premises.) The same concept may be applied to enhance campus security. For example, students could be issued a key fob or other portable unit that, when activated, generates a 911 alert that could be detected by the nearest NLD, which reports the emergency, the identity of the student sounding the alarm, and the exact or approximate location of the student, to campus police.

**Distributed data centers -** An NLD network can operate as a distributed data center. For example, a control unit could use the memory available on each NLD as part of a distributed data store. Data may be stored across a set of NLDs, within the control unit, or some combination of the two. For greater geographic diversity, data may be stored across multiple networks, e.g., with the control units acting as routers/gateways and coordinating the data distribution. In one embodiment, an NLD network can operate in a manner similar to an Amazon Elastic Compute Cloud™ (EC2), but with the advantage that the cloud storage is within a physical plant that is controlled by the user.

**Educational network -** Installations of NLDs within a school, university, or other educational setting provides wireless network for use by students and teachers alike. The zero-installation-cost aspect makes this an attractive option for public schools, which often struggle to provide quality education despite severe budget constraints.

**Encrypted mesh networks -** The mesh network created by the installation of NLDs may be configured so that all wireless traffic between NLDs or control units is encrypted. In one embodiment, a control unit may choose an encryption method and encryption keys, which may be shared among the NLDs in a network group or may be unique to each NLD. Because each NLD can receive programs uploaded to it, a control unit may be configured to continually change the encryption algorithm and/or encryption key so that someone attempting to break the encryption key must do so again and again. In one embodiment, for example, the control unit may upload a new encryption program to each NLD every 24 hours, and upload a new encryption key every 60 minutes. Other events that may trigger an encryption program or key update include detection of a potential security breach or a receipt of a user/operator request for an update. The reprogrammable nature of the NLDs makes them well suited for dynamic encryption methods.

**Internet of things -** As appliances and other devices that are connected to the Internet but are not controlled by a user proliferate, this so-called "Internet of things" (rather than people) is dramatically increasing in size. An NLD network could provide the networking backbone required by network-capable devices.

**Streaming Internet -** The mesh topology of an NLD network allows for distribution of streaming content in a manner that can take advantage of the inherent routing flexibility of the mesh to deliver content to multiple consumers while avoiding routing bottlenecks that may occur in traditional wireless installations. This makes NLD networks well suited as a delivery backbone for streaming Internet, for example.

**VoIP network -** An NLD network may be configured to create a VoIP network. For example, a control unit may upload VoIP applications to some or all of the the NLDs in the network. In this manner, a private VoIP network may be created for occupants of a particular facility, employees of a particular organization, subscribers to a particular city's private network, and so on. Likewise, a public VoIP network may be created for use by residents of a city, occupants of a hotel, and so on. These examples are illustrative only and are not intended to be limiting.

**Text messaging network -** A control unit attached to an NLD network may operate as a gateway between VoIP and traditional telephone service, known as a public switched telephone network (PSTN). With this connection to a PSTN, the NLD network may also be used to transmit text messages, which use the signaling layer of a PSTN. Likewise, an NLD network connected to a PSTN could extend other PSTN services into the facility into which the NLDs are installed.

**Paging network -** An NLD network that supports the wireless protocols used by pagers could be used to create an extended paging network. Because of the distributed, ubiquitous nature of the mesh network created among NLDs, the transceiver power could be very low, to avoid interference with sensitive or life-critical equipment such as is found in a hospital, for example.

**Mobility internetworking -** Applications that support mobility protocols may be uploaded to NLDs that include mobile-compatible transceivers, allowing them to be used to create internetworking mobility between wireless local area networks (wireless LAN, or WLAN) or Wi-Fi networks and other networks, such as: code division multiple access (CDMA) networks and their variants, such as wideband code division multiple access (WCDMA), CDMA2000, and IX (also known as 1XRTT); global system for mobile communications (GSM) networks; time division multiple access (TDMA) networks; worldwide interoperability for microwave access (WiMAX) networks; and long term evolution (LTE) networks.

**Analytics -** The placement of NLDs and the resulting wireless networks that they form make them an ideal platform for observation and analysis, not only because lights are typically placed in areas where there is human activity but also because the programmable nature of NLDs allows customization of specific NLDs to perform specific processing tasks. This distributed processing power is suited for performing a wide range of analytics, including:
- **Behavioral analytics -** the analysis of consumer behavior in retail stores, shopping malls, and physical work offices. This can include information about consumer location within a store, time that a consumer spends in front of a particular display, and other shopping patterns. Consumer preferences may also be divined based on content, including but not limited to coupons, special offers, and advertisements, etc., that are viewed, downloaded, or otherwise used by a consumer.
- **Control analytics -** analysis and control of devices and equipment in different locations. For example, analysis of when a particular room's lights are turned on and off by occupants can be used to determine when a room is likely to be occupied or unoccupied. This data may be used to by HVAC or environmental control systems to save power (e.g., by relaxing temperature settings for unused areas) and/or improve occupant comfort (e.g., by preheating or pre-cooling a room so that it is at a desired temperature by the time it becomes occupied.)
- **Communication analytics -** the analysis of communication between NLDs, which includes analysis of both traffic patterns and content. For example, in an NLD network that is used to serve streaming internet / movies to users, communication analysis provides insight into what interests the consumer most, where they spend most of their time, etc.
- **Utility control analytics -** the analysis of the use of utilities, such as power, water, and appliances. For example, "smart" households - e.g.., households which include active monitoring and control of equipment within the household - can make use of information collected about equipment use and patterns of use to make decisions about utility use. For example, information collected via a home NLD network could be used to determine that a water heater and a washing machine need not both be running at the same time; in this scenario, a control unit could control or instruct the washing machine to wait until there is sufficient hot water, and could control the electric water heater to delay its next heating cycle until the washing machine has finished. By doing this, the peak electricity usage can be controlled to stay below a threshold, which can often result in a discounted rate for power and thus a lower power bill.
- **Reporting and analytics on networks** -the analysis of and reporting on all aspects of the points mentioned above, including for example how many watts are consumed by each NLD.

The above detailed description of embodiments of the disclosure is not intended to be exhaustive or to limit the teachings to the precise form disclosed above. While specific embodiments of, and examples for, the disclosure are described above for illustrative purposes, various equivalent modifications are possible within the scope of the disclosure, as those skilled in the relevant art will recognize. For example, while processes or blocks are presented in a given order, alternative embodiments may perform routines having steps, or employ systems having blocks, in a different order, and some processes or blocks may be deleted, moved, added, subdivided, combined, and/or modified to provide alternative or sub-combinations. Each of these processes or blocks may be implemented in a variety of different ways. Also, while processes or blocks are at times shown as being performed in series, these processes or blocks may instead be performed in parallel, or may be performed at different times. Further any specific numbers noted herein are only examples: alternative implementations may employ differing values or ranges.

The teachings of the disclosure provided herein can be applied to other systems, not necessarily the system described above. The elements and acts of the various embodiments described above can be combined to provide further embodiments.

Any patents and applications and other references noted above, including any that may be listed in accompanying filing papers, are incorporated herein by reference. Aspects of the disclosure can be modified, if necessary, to employ the systems, functions, and concepts of the various references described above to provide yet further embodiments of the disclosure.

These and other changes can be made to the disclosure in light of the above Detailed Description. While the above description describes certain embodiments of the disclosure, and describes the best mode contemplated, no matter how detailed the above appears in text, the teachings can be practiced in many ways. Details of the system may vary considerably in its implementation details, while still being encompassed by the subject matter disclosed herein. As noted above, particular terminology used when describing certain features or aspects of the disclosure should not be taken to imply that the terminology is being redefined herein to be restricted to any specific characteristics, features, or aspects of the disclosure with which that terminology is associated. In general, the terms used in the following claims should not be construed to limit the disclosure to the specific embodiments disclosed in the specification, unless the above Detailed Description section explicitly defines such terms. Accordingly, the actual scope of the disclosure encompasses not only the disclosed embodiments, but also all equivalent ways of practicing or implementing the disclosure under the claims.

**Embodiments.** The following embodiments are contemplated by the subject matter described herein. This list is intended to be illustrative and not limiting.
1. A networkable light-emitting device that includes a light emitting element, a wireless transceiver for communicating with other networkable light-emitting devices to create a wireless network, a memory for storing programs uploaded to the device via the wireless network, and a controller that includes hardware for executing at least one program stored in the memory.
2. The device of embodiment 1 where the wireless transceiver includes a radio-frequency (RF) transceiver.
3. The device of embodiment 2 where the RF transceiver includes a wireless networking or Wi-Fi transceiver, a cellular or mobile telephone transceiver, a near-field communication (NFC) transceiver, and/or a radio frequency identification (RFID) transceiver.
4. The device of embodiment 1 where the wireless transceiver includes an infrared (IR) or visible light transceiver.
5. The device of embodiment 1 where the wireless transceiver supports the Internet protocol (IP).
6. The device of embodiment 1 where the memory for storing programs includes a data storage module.
7. The device of embodiment 6 where the data storage module includes a volatile memory.
8. The device of embodiment 7 where the volatile memory includes a static random access memory (SRAM) or a dynamic random access memory (DRAM).
9. The device of embodiment 6 where the data storage module includes a non-volatile memory.
10. The device of embodiment 9 where the non-volatile memory includes a read-only memory (ROM), a FLASH memory, a ferro-magnetic memory (FRAM), and/or a hard disk drive (HDD).
11. The device of embodiment 1 where the memory for storing programs is also used to store data received by the device.
12. The device of embodiment 11 where the data received by the device includes data received via the wireless transceiver and/or data received via a sensor in, on, connected to, or in communication with the device.
13. The device of embodiment 11 where the data received by the device modifies the operation of a program being executed by the controller
14. The device of embodiment 1 where a program being executed by the controller controls an operation of the light emitting element.
15. The device of embodiment 1 where a program being executed by the controller performs a computation that is unrelated to an operation of the light emitting element.
16. The device of embodiment 1 where the controller is configured to transmit, via the wireless network, a result of a program being executed by the controller.
17. The device of embodiment 1 where the light-emitting element includes at least one light emitting diode (LED).
18. The device of embodiment 17 where the light-emitting element includes at least two LEDs that produce different colors from each other.
19. The device of embodiment 18 where the LEDs that produce different colors produce light that, when combined, produce a light of a desired color.
20. The device of embodiment 19 where the light-emitting element produces white light.
21. The device of embodiment 19 where a program executed by the controller controls a hue or intensity of the light produced by the light-emitting element.
22. The device of embodiment 1 where the light-emitting element produces a light in the visible spectrum and/or a light outside of the visible spectrum.
23. A wireless network that includes a set of networkable light-emitting devices, where each device includes a light emitting element, a wireless transceiver for communicating with other networkable light-emitting devices to create the wireless network, a memory for storing programs uploaded to the device via the wireless network, and a controller that includes hardware for executing at least one program stored in the memory, where at least one of the devices executes a program that was uploaded to it via the wireless network to perform a processing task.
24. The wireless network of embodiment 23 where at least one device transmits a result of the processing task via the wireless network.
25. The wireless network of embodiment 23 where the processing task controls an operation of the light emitting element.
26. The wireless network of embodiment 23 where the processing task is unrelated to an operation of the light emitting element.
27. The wireless network of embodiment 23 that includes a control unit for uploading programs to and for communicating data to and from the networkable light emitting devices via the wireless network.
28. The wireless network of embodiment 27 where the control unit uses the memory within at least one of the devices as a distributed data store.
29. The wireless network of embodiment 28 where the control unit creates a redundant copy of data and stores each copy of the data in different networkable light-emitting devices.
30. The wireless network of embodiment 23 where each of the devices is associated with at least one unique address.
31. The wireless network of embodiment 23 where at least one of the devices includes a sensor that is in, or, or connected to the device.
32. A method for distributed processing, that includes, at a networkable light-emitting device having a light emitting element, a wireless transceiver for communicating with other networkable light-emitting devices to create a wireless network, a memory for storing programs uploaded to the device via the wireless network, and a controller that includes hardware for executing at least one program stored in the memory: receiving, via the wireless transceiver, a program to be executed by the controller, storing the received program into the memory, and executing, by the controller, the received program.
33. The method of embodiment 32 that includes determining a result of the executed program.
34. The method of embodiment 33 that includes transmitting the result of the executed program from the device via the wireless transceiver.
35. The method of embodiment 32 where the received program controls operation of the light-emitting element.
36. The method of embodiment 32 where the received program is unrelated to operation of the light-emitting element.
37. The method of embodiment 32 that includes using the wireless network to communicate with radio frequency identification (RFID) devices.
38. The method of embodiment 37 that includes communicating with the RFID devices to perform inventory control, inventory tracking, customer behavior tracking, customer preference tracking, or theft prevention.
39. The method of embodiment 32 that includes using the wireless network to communicate with a sensor or a monitoring device.
40. The method of embodiment 39 where the sensors or monitoring devices are in, on, or connected to the networkable light-emitting devices.
41. The method of embodiment 39 where the sensor or monitor includes a smoke detector, a heat detectors, a carbon monoxide detector, a carbon dioxide detector, a motion detector, a hazardous or non-hazardous gas or liquid detector, a hazardous chemical detector, a light detector, or an intrusion detector.
42. The method of embodiment 32 that includes configuring a set of the networkable light-emitting devices as a wireless mesh network.
43. The method of embodiment 42 that includes distributing a computing task among at least some of the networkable light-emitting devices.
44. The method of embodiment 43 where the networkable light-emitting devices perform parallel processing of the distributed computing task.
45. The method of embodiment 43 where the distributed computing task includes processing high-definition video.
46. The method of embodiment 42 where unused processing capability is made available for use by a consumer of processing resources.
47. The method of embodiment 42 that includes configuring the network as a computing platform that hosts virtual office applications.
48. The method of embodiment 42 that includes configuring the network as a computing platform that hosts virtual machine instances.
49. The method of embodiment 42 where the network includes an interface to a wired network and where the method includes configuring the network to be a wireless extension of the wired network.
50. The method of embodiment 42 that includes configuring the network as a city-wide wireless grid.
51. The method of embodiment 42 that includes configuring the network as a campus-wide wireless grid.
52. The method of embodiment 42 that includes configuring the network as a building wireless grid.
53. The method of embodiment 52 that includes using the building wireless grid for environmental monitoring and control, for heating, air conditioning, and ventilation (HVAC) monitoring and control, for access control, or for security monitoring and control.
54. The method of embodiment 42 that includes configuring at least some of the networkable light-emitting devices to operate as a distributed data store.
55. The method of embodiment 42 that includes configuring the network as an educational network.
56. The method of embodiment 42 where communication within the network is encrypted.
57. The method of embodiment 56 where the encryption protocol or encryption key is updated in response to a trigger event.
58. The method of embodiment 57 where the trigger event includes detection that a time limit has expired.
59. The method of embodiment 57 where the trigger event includes detection of a potential security breach.
60. The method of embodiment 57 where the trigger event includes a user-generated request.
61. The method of embodiment 42 that includes using the network to communicate with Internet-capable appliances or devices.
62. The method of embodiment 42 that includes configuring the network to operate as a distribution network for streaming media.
63. The method of embodiment 42 that includes configuring the network to operate as a public or private voice over Internet protocol (VoIP) network.
64. The method of embodiment 42 that includes configuring the network to communicate with a public switched telephone network (PSTN).
65. The method of embodiment 64 that includes configuring the network to support text messaging traffic.
66. The method of embodiment 42 that includes configuring the network to operate as a paging network.
67. The method of embodiment 42 that includes configuring the network to communicate with a cellular network.
68. The method of embodiment 67 that includes configuring the network to provide internetworking with mobility protocols.
69. The method of embodiment 68 that includes providing internetworking mobility between one or more of a Wi-Fi network, a WCDMA network, a GSM network, a TDMA network, a CDMA2000 network, a IX network, a WiMAX network, and an LTE network.
70. The method of embodiment 42 that includes configuring the network to perform analytics.
71. The method of embodiment 70 that includes configuring the network to perform behavioral analytics, control analytics, communication analytics, utility control analytics, or network analytics.
72. A networkable light-emitting device, that includes: a light emitting element; a wireless transceiver for communicating with other networkable light-emitting devices to create a wireless network; a memory for storing programs uploaded to the device via the wireless network; and a controller that includes hardware for executing at least one program stored in the memory.
73. The device of embodiment 72 wherein the wireless transceiver comprises a radio-frequency (RF) transceiver.
74. The device of embodiment 72 wherein the wireless transceiver comprises an infra-red (IR) or visible light transceiver.
75. The device of embodiment 72 wherein the memory for storing programs is also used to store data received by the device.
76. The device of embodiment 75 wherein the data received by the device includes at least one of: data received via the wireless transceiver; and data received via a sensor in, on, connected to, or in communication with the device.
77. The device of embodiment 75 wherein the data received by the device modifies the operation of a program being executed by the controller
78. The device of embodiment 72 wherein a program being executed by the controller controls an operation of the light emitting element.
79. The device of embodiment 72 wherein a program being executed by the controller performs a computation that is unrelated to an operation of the light emitting element.
80. The device of embodiment 72 wherein the controller is configured to transmit, via the wireless network, a result of a program being executed by the controller.
81. The device of embodiment 72 wherein the light-emitting element includes at least one light emitting diode (LED).
82. The device of embodiment 72 wherein a program executed by the controller controls a hue or intensity of the light produced by the light-emitting element.
83. The device of embodiment 72 comprising a power line communication (PLC) for communicating data to or from the device over a power line or power grid.
84. A wireless network, comprising: a plurality of networkable light-emitting devices, each device including: a light emitting element; a wireless transceiver for communicating with other of the plurality of networkable light-emitting devices to create the wireless network; a memory for storing programs uploaded to the device via the wireless network; and a controller that includes hardware for executing at least one program stored in the memory, wherein at least one of the plurality of devices executes a program that was uploaded to it via the wireless network to perform a processing task.
85. The wireless network of embodiment 84 wherein the at least one device transmits a result of the processing task via the wireless network.
86. The wireless network of embodiment 84, including a control unit for uploading programs to and for communicating data to and from the networkable light emitting devices via the wireless network.
87. The wireless network of embodiment 86 wherein the control unit uses the memory within at least one of the plurality of devices as a distributed data store.
88. The wireless network of embodiment 84 wherein at least one device communicates data via a power line communication (PLC) interface.
89. A method for distributed processing, the method including: at a networkable light-emitting device having a light emitting element, a wireless transceiver for communicating with other networkable light-emitting devices to create a wireless network, a memory for storing programs uploaded to the device via the wireless network, and a controller that includes hardware for executing at least one program stored in the memory: receiving, via the wireless transceiver, a program to be executed by the controller; storing the received program into the memory; and executing, by the controller, the received program.
90. The method of embodiment 89, including transmitting a result of the executed program from the device via the wireless transceiver.
91. The method of embodiment 89, including using the wireless network to communicate with radio frequency identification (RFID) devices.
92. The method of embodiment 89, including using the wireless network to communicate with a sensor or a monitoring device.
93. The method of embodiment 89, including configuring a plurality of the networkable light-emitting devices as a wireless mesh network.
94. The method of embodiment 93, including distributing a computing task among at least some of the plurality of networkable light-emitting devices.
95. The method of embodiment 94 wherein the plurality of networkable light-emitting devices perform parallel processing of the distributed computing task.
96. The method of embodiment 94 wherein the network includes an interface to a wired network and wherein the method comprises configuring the network to be a wireless extension of the wired network.
97. The method of embodiment 93, including configuring at least some of the plurality of networkable light-emitting devices to operate as a distributed data store.
98. The method of embodiment 93, including encrypting communication within the network.
99. The method of embodiment 93, including configuring the network to operate as at least one of: a distribution network for streaming media; a public or private voice over Internet protocol (VoIP) network; a public switched telephone network (PSTN); a network for text messaging traffic; a paging network; a network for communicating with a cellular network; a network for providing internetworking with mobility protocols; and a network for performing analytics.

## Claims

1. A networkable light-emitting device, that includes:
a light emitting element;
a wireless transceiver for communicating with other networkable light-emitting devices to create a wireless network;
a memory for storing programs uploaded to the device via the wireless network; and
a controller that includes hardware for executing at least one program stored in the memory;
wherein the memory for storing programs is also used to store data received by the device;
wherein the controller is configured to transmit, via the wireless network, a result of a program being executed by the controller.

2. The device of claim 1 wherein the data received by the device includes at least one of:
data received via the wireless transceiver; and
data received via a sensor in, on, connected to, or in communication with the device.

3. The device of claim 1 wherein the data received by the device modifies the operation of a program being executed by the controller.

4. The device of claim 1 wherein a program being executed by the controller performs a computation that is unrelated to an operation of the light emitting element.

5. The device of claim 1 comprising a power line communication (PLC) for communicating data to or from the device over a power line or power grid.

6. A wireless network, comprising:
a plurality of networkable light-emitting devices, each device including:
a light emitting element;
a wireless transceiver for communicating with other of the plurality of networkable light-emitting devices to create the wireless network;
a memory for storing programs uploaded to the device via the wireless network; and
a controller that includes hardware for executing at least one program stored in the memory,
wherein at least one of the plurality of devices executes a program that was uploaded to it via the wireless network to perform a processing task;
wherein the at least one device transmits a result of the processing task via the wireless network.

7. The wireless network of claim 6, including a control unit for uploading programs to and for communicating data to and from the networkable light emitting devices via the wireless network.

8. The wireless network of claim 7 wherein the control unit uses the memory within at least one of the plurality of devices as a distributed data store.

9. The wireless network of claim 6 wherein at least one device communicates data via a power line communication (PLC) interface.

10. A method for distributed processing, the method including:
at a networkable light-emitting device having a light emitting element, a wireless transceiver for communicating with other networkable light-emitting devices to create a wireless network,
a memory for storing programs uploaded to the device via the wireless network, and a controller that includes hardware for executing at least one program stored in the memory:
receiving, via the wireless transceiver, a program to be executed by the controller;
storing the received program into the memory; and
executing, by the controller, the received program;
wherein the method further includes determining a result of the executed program and transmitting a result of the executed program from the device via the wireless transceiver;
wherein the method further includes configuring a plurality of the networkable light-emitting devices as a wireless mesh network.

11. The method of claim 10, including distributing a computing task among at least some of the plurality of networkable light-emitting devices.

12. The method of claim 11 wherein the plurality of networkable light-emitting devices perform parallel processing of the distributed computing task.

13. The method of claim 11 wherein the network includes an interface to a wired network and wherein the method comprises configuring the network to be a wireless extension of the wired network.

14. The method of claim 10, including configuring the network to operate as at least one of:
a distribution network for streaming media;
a public or private voice over Internet protocol (VoIP) network;
a public switched telephone network (PSTN);
a network for text messaging traffic;
a paging network;
a network for communicating with a cellular network;
a network for providing internetworking with mobility protocols; and
a network for performing analytics.

15. A networkable controller for controlling a light-emitting element, the controller comprising:
an output for controlling an operation of a light emitting element;
a wireless transceiver for communicating with other networkable controllers to create a wireless mesh network;
a memory for storing programs uploaded to the controller via the wireless transceiver; and
a hardware circuit for executing programs stored in the memory, wherein at least one program being executed by the hardware circuit performs an operation that is unrelated to the operation of the light emitting element.
